# EUROPÄISCHE PATENTSCHRIFT

(11) **EP 1 144 857 B1**
(45) Veröffentlichungstag und Bekanntmachung des Hinweises auf die Patenterteilung: **24.05.2006**
(21) Anmeldenummer: 00982989.6
(22) Anmeldetag: 12.10.2000
(51) Int. Cl.: F02M 59/36, F02M 59/46, F02M 45/06, F16K 1/44

(54) **DOPPELSCHALTENDES STEUERVENTIL MIT HYDRAULISCHER VERSTÄRKUNG DES AKTORS**
DUAL-SWITCHING CONTROL VALVE WITH REINFORCEMENT OF THE HYDRAULIC ACTUATOR
SOUPAPE DE DISTRIBUTION A DOUBLE COMMUTATION COMPRENANT UN RENFORCEMENT HYDRAULIQUE DE L'ACTIONNEUR

(30) Priorität: 14.10.1999 DE 19949528
(43) Veröffentlichungstag der Anmeldung: 17.10.2001
(73) Patentinhaber: ROBERT BOSCH GMBH, 70442 Stuttgart (DE)
(72) Erfinder: BOECKING, Friedrich, 70499 Stuttgart (DE)
(86) Internationale Anmeldenummer: PCT/DE2000/003583
(87) Internationale Veröffentlichungsnummer: WO 2001/027465

(56) Entgegenhaltungen:
- EP-A- 0 367 114
- WO-A-00/39451
- WO-A-01/23747
- DE-A- 19 732 802
- DE-A- 19 860 678
- US-A- 5 875 764

## Beschreibung

### Stand der Technik

Die Erfindung betrifft ein doppeltschaltendes Steuerventil für einen Injektor eines Kraftstoffeinspritzsystems nach dem Oberbegriff der nebengordneten Ansprüche 1 bis 3.

Aus der DE 197 32 802 A sowie den nachveröffentlichten WO 00 39451 A und WO 01 23747 A sind Injektoren bekannt, die durch einen hydraulischen Übersetzer betätigt werden. Damit das Steuerventil dieser Injektoren in drucklosem Zustand eine definierte Schaltstellung einnimmt, ist eine Schließfeder vorgesehen.

Der Erfindung liegt die Aufgabe zugrunde, ein doppeltschaltendes Steuerventil für einen Injektor eines Kraftstoffeinspritzsystems bereitzustellen, welches die Bemessung kleinster Voreinspritzmengen erlaubt sowie einfach und kompakt aufgebaut ist.

Diese Aufgabe wird erfindungsgemäß gelöst durch ein Steuerventil für den Injektor eines Kraftstoffeinspritzsystems mit den kennzeichnenden Merkmalen der nebengeordneten Ansprüche 1 bis 3.
Das erfindungsgemäße Steuerventil hat den Vorteil, dass der hydraulische Übersetzer die Schaltzeiten verkürzt. Der Steuerdruck des Injektors baut eine Vorspannung gegen die Betätigungsrichtung des Aktors auf, so dass der hydraulische Übersetzer erst wirksam wird, wenn er einen entsprechenden Gegendruck aufgebaut hat und sich bereits in Bewegung befindet. In Folge der sehr kurzen Schaltzeiten können auch sehr kleine Voreinspritzmengen bemessen werden. Außerdem ist das erfindungsgemäße Steuerventil einfach und in Folge dessen kompakt aufgebaut.

Durch das vorhandensein einer Schließfeder, die auf das Stellglied entgegen der Betätigungsrichtung des Aktors einwirkt, nimmt das Steuerventil auch bei fehlendem Druck im Steuerraum stets eine definierte Schaltstellung und die Dichtwirkung in der Schaltstellung zwischen der Haupteinspritzung und der Voreinspritzung verbessert wird.

Bei einer Ausführungsfoprm der Erfindung ist vorgesehen, dass dass die Schließfeder in der zweiten Ausnehmung angeordnet ist und sich gegen einen Absatz im Gehäuse und das Stellglied abstützt, so dass der Bauaufwand gering ist.

Alternativ kann die Schließfeder in einer an den Steuerraum anschließenden dritten Ausnehmung angeordnet sein und sich stützt über eine in einer zweiten Führungsbohrung geführte Druckstange gegen das Stellglied und einen in einer Ringnut in der dritten Ausnehmung angeordneten Seeger-Ring ab, so dass die zweite Ausnehmung und der Durchmesser des zweiten Dichtsitzes klein gehalten werden können.

Bei einer weiteren Variante ist vorgesehen, dass die Schließfeder in einer an den Steuerraum anschließenden dritten Ausnehmung angeordnet ist und sich über eine in einer zweiten Führungsbohrung geführte Druckstange gegen das Stellglied und einen in den Steuerraum ragenden Ventilkolben abstützt, so dass eine Schließfeder mit kleiner Federrate und geringem Durchmesser einsetzbar ist.

Varianten der Erfindung sehen vor, dass die erste Ausnehmung mit einem Kraftstoffrücklauf in Verbindung steht, und dass die zweite Ausnehmung mit einem Steuerraum in Verbindung steht, so dass der Bedarf an Antriebsenergie für den Aktor gering ist, da er nur während der Voreinspritzung Arbeit gegen die auf das Stellglied wirkenden hydraulischen Kräfte verrichten muss. Außerdem wird der Aktor nur auf Druck beansprucht, was insbesondere bei der Verwendung von Piezo-Aktoren von Vorteil ist.

Bei einer erfindungsgemäßen Ausgestaltung begrenzen die dem Stellglied abgewandte Stirnseite des Stößels und ein von dem Aktor betätigter Kolben einen flüssigkeitsgefüllten Druckraum des hydraulischen Übersetzers begrenzen, so dass die Weg- oder Kraftübersetzung einfach und verlustarm erfolgt.

Bei einer weiteren Ausführungsform weist die Druckstange mindestens eine in Längsrichtung verlaufende Nut, Längsbohrung oder sich im Wesentlichen über die Länge der Druckstange erstreckende Abflachung auf, so dass eine hydraulische Verbindung zwischen Steuerraum und zweiter Ausnehmung besteht. Außerdem kann durch geeignete Dimensionierung der Nut, Längsbohrung oder Abflachung die Funktion der Ablaufdrossel in die Druckstange integriert werden.

Bei einer Ausführung der Erfindung ist vorgesehen, dass das Stellglied einen koaxial zur Längsachse des Stößels angeordneten Bund aufweist, und dass die Mittel zum Abdichten des Ringraums von der zweiten Ausnehmung und/oder die Mittel zum Abdichten des Ringraums von der ersten Ausnehmung einen koaxial zur Längsachse des Stößels angeordneten kegelstumpfförmigen Dichtkegel aufweisen, so dass über die gesamte Lebensdauer des Steuerventils eine gute Dichtwirkung erzielt wird.

In Ergänzung der Erfindung ist der zweite Dichtkegel Teil einer koaxial zur Längsachse des Stellglieds angeordneten Hülse sind, so dass die Montage erleichtert und die Hülse auch vom Stößel zentriert wird.

Eine Variante sieht vor, dass die dem Stellglied zugewandte Stirnfläche der Hülse eben ist, und dass die der Hülse zugewandte Stirnfläche des Stellglieds eben ist, so dass die Hülse nicht durch den Ventilkolben, sondern durch den zweiten Dichtsitz zentriert wird und der Dichtkegel der Hülse bestmöglich auf der Dichtfläche im Gehäuse anliegt. Außerdem dichten o. g. Stirnflächen den Ringraum gegen den Steuerraum ab.

In weiterer Ausgestaltung der Erfindung ist vorgesehen, dass die dem Ventilkolben zugewandte Stirnfläche der Hülse und die der Hülse zugewandte Stirnfläche des Ventilkolbens kegelstumpfförmig sind, so dass die Hülse von dem Stößel zentriert wird. Außerdem dichten o. g. Stirnflächen den Ringraum gegen den Steuerraum ab.

Bei einer weiteren Ausgestaltung der Erfindung ist die Hülse lösbar mit dem Stellglied verbunden ist, so das die Montage vereinfacht wird und auf eine Teilung des Gehäuses verzichtet werden kann.

Eine andere Variante sieht vor, dass das Stellglied kugelförmig ausgebildet ist, und dass die Mittel zum Abdichten des Ringraums von der zweiten Ausnehmung und/oder die Mittel zum Abdichten des Ringraums von der ersten Ausnehmung auf der Kugeloberfläche verlaufende Dichtlinien sind, so dass ein besonders kompakter und einfacher Aufbau erreicht wird. Außerdem müssen erste Führungsbohrung sowie erster und zweiter Dichtsitz nicht genau fluchten, da sich das kugelförmige Ventilglied selbst zentriert.

Zusätzlich sind zwischen der Bohrung sowie der ersten und der zweiten Ausnehmung Dichtflächen ausgebildet, die mit den Mitteln zum Abdichten des Ringraums von der ersten Ausnehmung und/oder den Mitteln zum Abdichten des Ringraums von der zweiten Ausnehmung zusammenwirken, so dass eine weiter verbesserte Abdichtung erreicht wird.

In Ergänzung der erfindung ist vorgesehen, dass das Gehäuse einteilig ausgeführt ist, so dass die Zahl der Dichtflächen verringert wird.

Bei einer Ausführungsform der Erfindung wird das Steuerventil als 2/3-Steuerventil betrieben, so dass die Bemessung kleinster Voreinspritzmengen verbessert wird und gleichzeitig große Haupteinspritzmengen möglich sind.

Bei einer Variante der Erfindung ist der Aktor ein Piezo-Aktor, so dass große Kräfte und ein schnelles Ansprechen gewährleistet sind.

In weiterer Ergänzung der Erfindung ist vorgesehen, dass das Einspritzsystem ein Common-Rail-Einspritzsystem ist, so dass die Vorteile des erfindungsgemäßen Steuerventils auch diesen Einspritzsystemen zugute kommen.

Die eingangs genannte Aufgabe wird auch gelöst durch einen Injektor für ein Kraftstoffeinspritzsystem für Brennkraftmaschinen mit einem von einem Steuerventil gesteuerten Steuerraum, wobei das Steuerventil ein von einem Aktor betätigtes Stellglied aufweist, wobei das Stellglied und eine Bohrung eines Gehäuses einen radial begrenzten Ringraum bilden, der an seinen Enden eine erste Ausnehmung und eine zweite Ausnehmung aufweist, wobei das Stellglied mittels eines in einer ersten Führungsbohrung geführten Stößels axial verschiebbar ist und Mittel zum Abdichten des Ringraums von der ersten Ausnehmung sowie Mittel zum Abdichten des Ringraums von der zweiten Ausnehmung aufweist und wobei der Stößel mittels eines hydraulischen Übersetzers von dem Aktor betätigt wird.

Der erfindungsgemäße Injektor hat den Vorteil verkürzter Schaltzeiten. Der Steuerdruck des Injektors baut eine Vorspannung gegen die Betätigungsrichtung des Aktors auf, so dass der hydraulische Übersetzer erst wirksam wird, wenn er einen entsprechenden Gegendruck aufgebaut hat und sich bereits in Bewegung befindet. In Folge der sehr kurzen Schaltzeiten können auch sehr kleine Voreinspritzmengen bemessen werden. Außerdem ist der erfindungsgemäße Injektor einfach und in Folge dessen kompakt aufgebaut.

Weitere Vorteile und vorteilhafte Ausgestaltungen sind der nachfolgenden Beschreibung, der Zeichnung und den Ansprüchen entnehmbar. Es zeigen:
- Fig. 1:: einen Injektor für ein Kraftstoffeinspritzsystem mit einem schematisiert dargestellten Steuerventil;
- Fig. 2:: eine erste Ausführungsform eines erfindungsgemäßen Steuerventils im Schnitt;
- Fig. 3:: eine zweite Ausführungsform eines erfindungsgemäßen Steuerventils im Schnitt;
- Fig. 4:: eine dritte Ausführungsform eines erfindungsgemäßen Steuerventils im Schnitt; sowie
- Fig. 5:: ein Diagramm des zeitlichen Ablaufs einer Einspritzung.

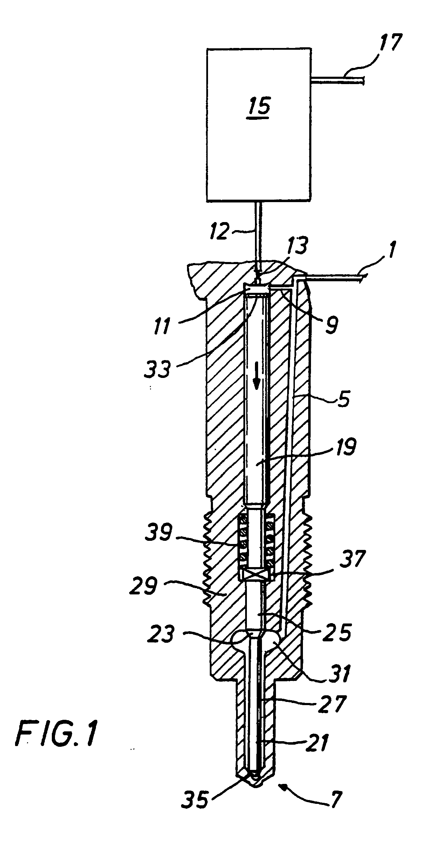

In Fig. 1 ist ein erfindungsgemäßer Injektor dargestellt. Über einen Hochdruckanschluss 1 wird Kraftstoff über einen Zulaufkanal 5 zu einer Einspritzdüse 7 sowie über eine Zulaufdrossel 9 in einen Steuerraum 11 geführt. Der Steuerraum 11 ist über einen Abflusskanal 12 und eine Ablaufdrossel 13, die durch ein Steuerventil 15 geöffnet werden kann, mit einem Kraftstoffrücklauf 17 verbunden.

Der Steuerraum 11 wird von einem Ventilkolben 19 begrenzt. An den Ventilkolben 19 schließt eine Düsennadel 21 an, die verhindert, dass der unter Druck stehende Kraftstoff zwischen den Einspritzungen in den nicht dargestellten Brennraum fließt. Die Düsennadel 21 weist eine Querschnittsänderung 23 von einem größeren Durchmesser 25 auf einen kleineren Durchmesser 27 auf. Mit ihrem größeren Durchmesser 25 ist die Düsennadel 21 in einem Gehäuse 29 geführt. Die Querschnittsänderung 23 begrenzt einen Druckraum 31 der Einspritzdüse 7

Bei geschlossener Ablaufdrossel 13 ist die auf eine Stirnfläche 33 des Ventilkolbens 19 wirkende hydraulische Kraft größer als die auf die Querschnittsänderung 23 wirkende hydraulische Kraft, weil die Stirnfläche 33 des Ventilkolbens 19 größer als die Ringfläche der Querschnittsänderung 23 ist. In Folge dessen wird die Düsennadel 21 in einen Düsennadelsitz 35 gepresst und dichtet den Zulaufkanal 5 zum nicht dargestellten Brennraum ab.

Wenn die nicht dargestellte Hochdruckpumpe des Kraftstoffeinspritzsystems nicht angetrieben wird, weil der Motor steht, dann schließt eine auf einen Absatz 37 der Düsennadel 21 wirkende Düsenfeder 39 die Einspritzdüse 7 bzw. den Injektor.

Wenn die Ablaufdrossel 13 bzw. das Steuerventil 15 geöffnet wird, sinkt der Druck im Steuerraum 11 und damit die auf die Stirnfläche 33 des ventilkolbens 19 wirkende hydraulische Kraft. Sobald diese hydraulische Kraft kleiner ist als die auf die Querschnittsänderung 23 wirkende hydraulische Kraft, öffnet die Düsennadel 21, so dass der Kraftstoff durch die nicht dargestellten Spritzlöcher in den Brennraum gelangen kann. Diese indirekte Ansteuerung der Düsennadel 21 über ein hydraulisches Kraftverstärkersystem ist notwendig, weil die zu einem schnellen Öffnen der Düsennadel 21 benötigten Kräfte mit dem Steuerventil 15 nicht direkt erzeugt werden können. Die dabei zusätzlich zu der in den Brennraum eingespritzten Kraftstoffmenge benötigte sogenannte "Steuermenge" gelangt über die Zulaufdrossel 9, den Steuerraum 11 und das Steuerventil 15 in den Kraftstoffrücklauf 17.

Zusätzlich zur Steuermenge entsteht auch noch an der Düsennadelführung und der Ventilkolbenführung eine Leckage. Die Steuer- und die Leckagemengen können bis zu 50 mm³/Hub betragen. Sie werden über den Kraftstoffrücklauf 17 wieder in den nicht dargestellten Kraftstoffbehälter zurückgeführt. Zwischen den Einspritzungen wird die Ablaufdrossel 13 durch das Steuerventil 15 verschlossen.

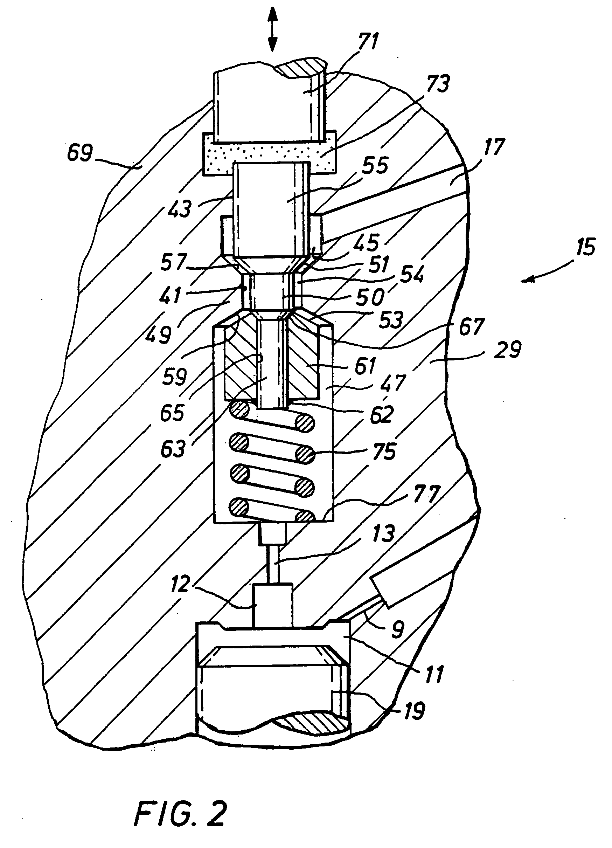

Fig. 2 zeigt eine erste Ausführungsform eines erfindungsgemäßen Steuerventils. In dem Gehäuse 29 ist eine Bohrung 41 vorgesehen. Koaxial zur Bohrung 41 ist eine erste Führungsbohrung 43 vorhanden. Die Bohrung 41 weist an ihren Enden eine erste Ausnehmung 45 und eine zweite Ausnehmung 47 auf. Das Stellglied 49 weist einen Bund 50 sowie einen ersten Dichtkegel 51 und einen zweiten Dichtkegel 53 auf. Die Bohrung 41 und der Bund 50 bilden einen Ringraum 54.

In der ersten Führungsbohrung 43 ist ein Stößel 55 geführt, der mit dem Stellglied 49 verbunden ist.

Die Bohrung 41 hat einen kleineren Durchmesser als die erste Führungsbohrung 43. Den Übergang zwischen Stößel 55 und Bund 50 bildet ein als erster Dichtkegel 51 ausgeführter Kegelstumpf. Zwischen der Bohrung 41 und der ersten Ausnehmung 45 ist in dem Gehäuse 29 ein erster Dichtsitz 57 ausgebildet, der mit dem ersten Dichtkegel 51 den Ringraum 54 von der ersten Ausnehmung 45 hydraulisch trennen kann. Der zweite Dichtkegel 53 kann zusammen mit einem zwischen Bohrung 41 und zweiter Ausnehmung 47 angeordneten zweiten Dichtsitz 59, den Ringraum 54 von der zweiten Ausnehmung 47 trennen.

Der zweite Dichtkegel 53 ist Teil einer Hülse 61. Die Hülse 61 kann über eine Schweißnaht 62 über einen Zapfen 63 mit dem Bund 50 verbunden sein. Alternativ kann die Hülse 61 auch mit dem Bund durch Schrauben oder eine Nut im Zapfen 63 und einen Seeger-Ring verbunden sein.

In der dargestellten Ausführungsform sind die Stirnfläche des Bunds 50 und eine entsprechende Stirnfläche 67 der Hülse 61 kegelstumpfförmig, so dass die Hülse zentriert wird. Gleichzeitig findet eine Abdichtung zwischen Hülse 61 und dem den Ringraum 54 bildenden Abschnitt des Stellglieds 49 statt.

Alternativ kann, insbesondere wenn die Hülse 61 mit dem Bund 50 verschraubt ist, die Dichtfläche eben sein, so dass die Hülse 61 nicht von dem Bund 50, sondern von dem zweiten Dichtsitz 59 zentriert wird. Dies wird erleichtert, wenn zwischen dem Zapfen 63 und einer Mittenbohrung 65 der Hülse 61 Spiel vorhanden ist.

In Fig. 2 ist auch zu erkennen, dass die zweite Ausnehmung 47 über einen Abflusskanal 12 und eine Ablaufdrossel 13 mit dem Steuerraum 11 in Verbindung steht, und dass die erste Ausnehmung 45 mit dem Kraftstoffrücklauf 17 in Verbindung steht. Alternativ kann durch eine geeignete Dimensionierung der Ringraum 54 die Funktion der Ablaufdrossel 13 übernehmen.

Betätigt wird das Steuerventil durch einen nicht dargestellten Aktor, der auf den Stößel 55 über einen hydraulischen Übersetzer 69 einwirkt. Der Aktor ist mit einem Kolben 71 verbunden, der Druck auf die in dem Druckraum 73 des Übersetzers 69 befindliche Flüssigkeit ausübt. Wenn der Aktor kann ein Piezo-Aktor ist, kann der Aktor große Kräfte über einen kleine Weg aufbringen. In diesem Fall ist die gezeigte Konstellation des Übersetzer sinnvoll, in der der Kolben 71 einen größeren Durchmesser als der Stößel 55 hat. Wenn der Aktor z. B. elektro-magnetisch wirkt, können kleine Kräfte über einen großen Weg übertragen werden. In diesem Fall empfiehlt es sich, den Durchmesser des Kolbens 71 kleiner als den des Stößels 55 zu wählen.

Eine in der zweiten Ausnehmung 47 angeordnete Schließfeder 75 stützt sich auf der einen Seite gegen einen Absatz 77 des Gehäuses 29 und auf der anderen Seite gegen die Hülse 61 ab. Durch die Schließfeder 75 ist sichergestellt, dass das Stellglied 49 auch bei fehlendem Druck im Steuerraum 11 in die erste Schaltstellung a gebracht wird. Außerdem ist der Aktor nur auf Druck belastet, was insbesondere bei der Verwendung von Piezo-Aktoren wichtig ist, da diese Aktoren nur zuverlässig auf Druck arbeiten.

Das erfindungsgemäße Steuerventil wird idR als 2/3-Steuerventil eingesetzt. In der ersten Schaltstellung a wird die zweite Ausnehmung 47 von dem Ringraum 54 hydraulisch getrennt. In der zweiten Schaltstellung b wird die erste Ausnehmung 45 von dem Ringraum 54 hydraulisch getrennt.

In beiden Schaltstellungen a und b ist der Steuerraum 11 von dem Kraftstoffrücklauf 17 getrennt; d. h. die Einspritzdüse 7 ist geschlossen. Beim Übergang von erster Schaltstellung a zu zweiter Schaltstellung b ist für kurze Zeit eine hydraulische Verbindung zwischen Steuerraum 11 und Kraftstoffrücklauf 17 vorhanden; d. h. der Druck im Steuerraum 11 bricht mindestens teilweise zusammen und die Einspritzdüse 7 öffnet kurzzeitig. Dieses kurzzeitige Öffnen wird für eine Voreinspritzung genutzt. Die Voreinspritzmenge und -dauer kann durch die Auslegung des Aktors und der Ablaufdrossel 13, bzw. des Ringraums 54 mit großer Wiederholgenauigkeit konstruktiv festgelegt werden.
In der dritten Schaltstellung c nimmt das Stellglied 49 eine Zwischenstellung ein, in der erster und zweiter Dichtkegel 51 und 53 nicht auf erstem oder zweitem Dichtsitz 57, 59 aufliegen. Diese Schaltstellung c löst die Haupteinspritzung aus.

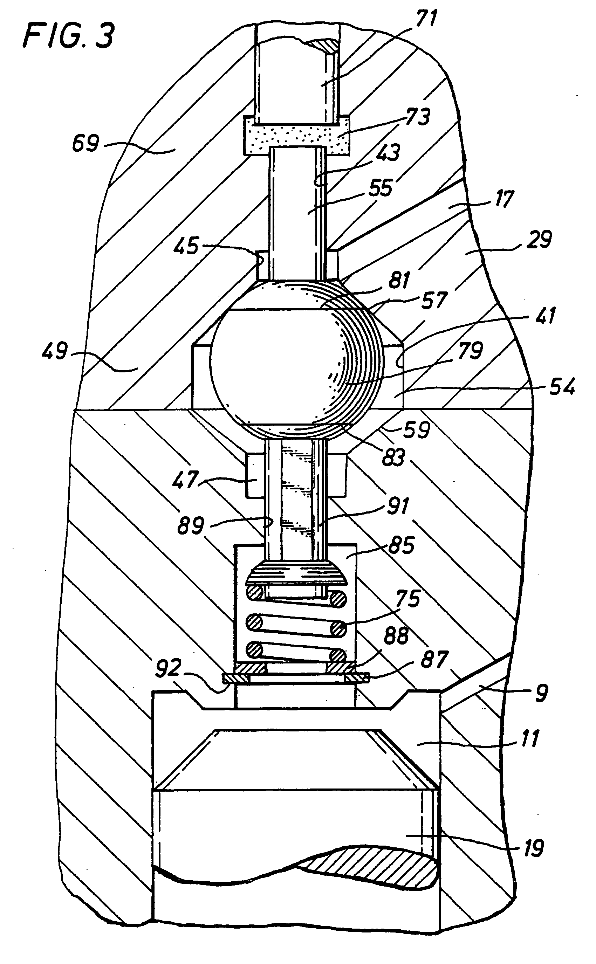

In Fig. 3 ist eine zweite Ausführungsform der Erfindung dargestellt. Gleiche Bauteile wurden mit den gleichen Bezugszeichen versehen. Im Folgenden wird nur auf die Unterschiede zwischen der Ausführungsform gemäß Fig. 2 und Fig. 3 eingegangen.

Das Stellglied 49 besteht aus einer Kugel 79. Zusammen mit dem ersten und dem zweiten Dichtsitz 57 und 59 ergeben sich einer erste Dichtlinie 81 und eine zweite Dichtlinie 83 auf der Kugel 79. Erste Dichtlinie 81 und zweite Dichtlinie 83 können voneinander verschiedene Durchmesser haben. Dadurch ergeben sich unterschiedliche aus dem Druck im Steuerraum 11 herrührende hydraulische Schließkräfte. Wenn der Stößel 55 und das Stellglied 49 nicht fest miteinander verbunden sind, kann sich das Stellglied 49 unabhängig davon ob die Längsachsen von erstem und zweitem Dichtkegel 51 und 53 sowie der ersten Führungsbohrung 43 zusammenfallen selbst zentrierten, so dass die Dichtwirkung immer gut ist und der Fertigungsaufwand sinkt.

Die Schließfeder 75 ist in einer an den Steuerraum 11 anschließenden dritten Ausnehmung 85 angeordnet. Die Schließfeder stützt sich auf einer Seite über einen Seeger-Ring 87 und eine Scheibe 88 und auf der anderen Seite über eine in einer zweiten Führungsbohrung 89 im Gehäuse 29 geführte Druckstange 91 gegen die Kugel 79 ab. Der Seeger-Ring 87 wiederum ist in einer Ringnut 92 der dritten Ausnehmung 85 angeordnet. Um die hydraulische Verbindung zwischen Steuerraum 11, bzw. dritter Ausnehmung 85 und zweiter Ausnehmung 47 herzustellen, sind in der Druckstange 91 Abflachungen vorhanden. Alternativ können auch nicht dargestellte Nuten oder Bohrungen in der Druckstange 91 vorgesehen sein. Durch geeignete Dimensionierung der Abflachungen, Nuten oder Bohrungen können diese die Funktion der Ablaufdrossel 13 übernehmen.

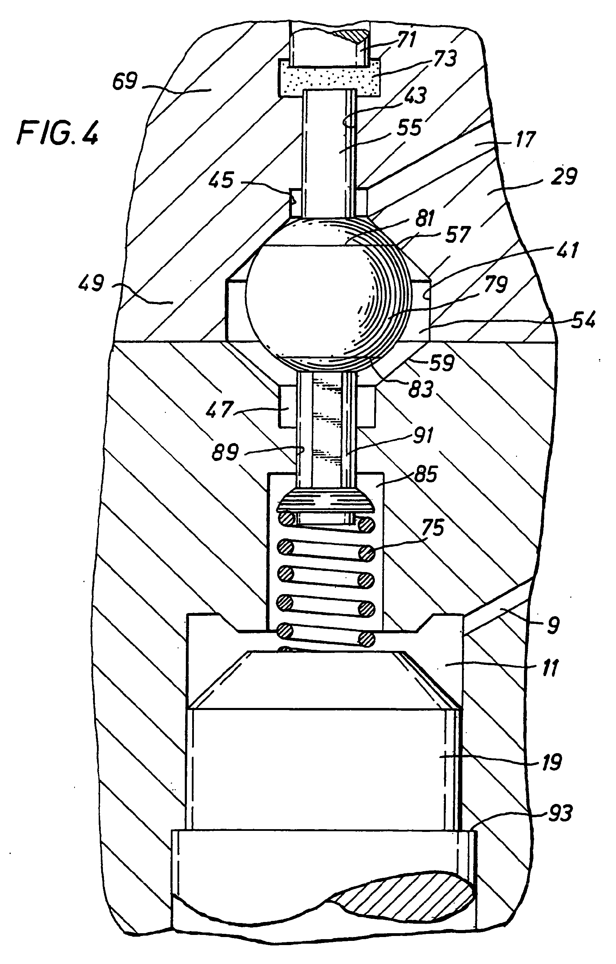

Fig. 4 zeigt eine weitere erfindungsgemäße Ausführungsform bei der sich die Schließfeder auf einer Seite gegen den Ventilkolben 19 abstützt. In Fig. 4 ist auch erkennbar, dass die Bewegung des Ventilkolbens 19 in Richtung der Steuerventils 15 durch einen Hubanschlag 93 derart begrenzt wird, dass stets eine Verbindung zwischen Zulaufdrossel 9 und zweiter Ausnehmung 47 vorhanden ist.

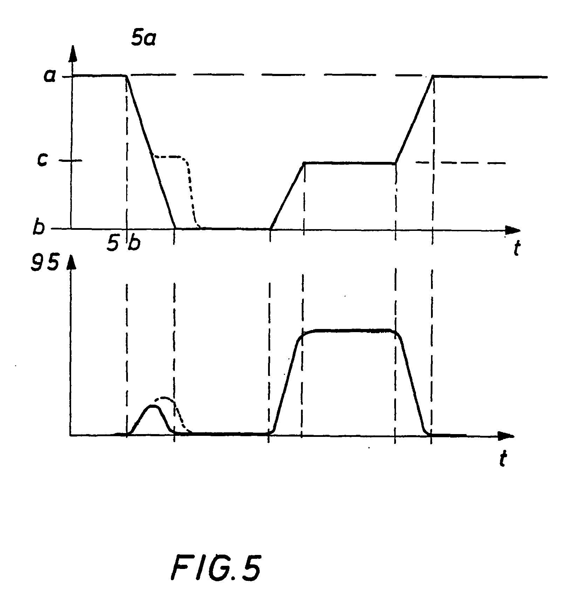

Fig. 5 zeigt den zeitlichen Verlauf des Hubs 95 der Düsennadel 21 in Abhängigkeit der drei Schaltstellungen a, b und c. In beiden Diagrammen 5a und 5b ist auf der Abszisse die Zeit t aufgetragen. Die Ordinate des Diagramms 5a zeigt die Schaltstellungen a, b, und c des Steuerventils, während die Ordinate des Diagramms 5b den Hub 95 der Düsennadel 21 darstellt.

Ausgehend von der ersten Schaltstellung a wird das Steuerventil 15 vom Aktor in die zweite Schaltstellung b bewegt. Während des Übergangs zwischen beiden Schaltstellungen öffnet die Düsennadel 21 ein wenig. Dadurch wird die Voreinspritzmenge in den Brennraum eingespritzt. Um die voreinspritzmenge zu erhöhen kann das Steuerventil 15 während der Voreinspritzung auch kurzzeitig in der dritten Schaltstellung c verharren. Diese Variante ist durch die gestrichelten Linien dargestellt.

Die Haupteinspritzung erfolgt, indem das Steuerventil von der zweiten Schaltstellung b in die dritte Schaltstellung c gesteuert wird. Diese Schaltstellung wird solange aufrecht erhalten, bis die erforderliche Einspritzmenge eingespritzt wurde. Danach wird die Haupteinspritzung beendet, indem das Steuerventil in die erste Schaltstellung a gebracht wird. Anhand dieses Ablaufs wird auch ein weiterer Vorteil des erfindungsgemäßen Steuerventils deutlich: Der Aktor muss lediglich beim Übergang von der ersten Schalstellung a in die zweite Schaltstellung b Arbeit gegen den Druck im Steuerraum 11 verrichten, so dass der Bedarf an Antriebsenergie sehr gering ist. Außerdem führt der während dieses Übergangs sinkende Druck im Steuerraum zu einer geringen Leistunganforderung.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Steuerventil für den Injektor eines Kraftstoffeinspritzsystems für Brennkraftmaschinen mit einem von einem Aktor betätigten Stellglied (49), wobei das Stellglied (49) und eine Bohrung (41) eines Gehäuses (29) einen radial begrenzten Ringraum (54) bilden, der an seinen Enden eine erste Ausnehmung (45) und eine zweite Ausnehmung (47) aufweist, wobei das Stellglied (49) mittels eines in einer ersten Führungsbohrung (43) geführten Stößels (55) axial verschiebbar ist und Mittel (51, 81) zum Abdichten des Ringraums (54) von der ersten Ausnehmung (45) sowie Mittel (53, 83) zum Abdichten des Ringraums (54) von der zweiten Ausnehmung (47) aufweist, wobei der Stößel (55) mittels eines hydraulischen Übersetzers (69) von dem Aktor betätigt wird, wobei die erste Ausnehmung (45) auf der dem hydraulischen Übersetzer (69) zugewandten Seite des Ringraums (54) angeordnet ist, und wobei die zweite Ausnehmung (45) auf der dem hydraulischen Übersetzer (69) abgewandten Seite des Ringraums (54) angeordnet ist, und mit einer Schließfeder (75), die auf das Stellglied (49) entgegen der Betätigungsrichtung des Aktors einwirkt, **dadurch gekennzeichnet, dass** die Schließfeder (75) auf der dem hydraulischen Übersetzer (69) abgewandten Seite des Ringraums (54) angeordnet ist und dass die Schließfeder (75) in der zweiten Ausnehmung (47) angeordnet ist und sich gegen einen Absatz (77) im Gehäuse (29) und das Stellglied (49) abstützt.

2. Steuerventil für den Injektor eines Kraftstoffeinspritzsystems für Brennkraftmaschinen mit einem von einem Aktor betätigten Stellglied (49), wobei das Stellglied (49) und eine Bohrung (41) eines Gehäuses (29) einen radial begrenzten Ringraum (54) bilden, der an seinen Enden eine erste Ausnehmung (45) und eine zweite Ausnehmung (47) aufweist, wobei das Stellglied (49) mittels eines in einer ersten Führungsbohrung (43) geführten Stößels (55) axial verschiebbar ist und Mittel (51, 81) zum Abdichten des Ringraums (54) von der ersten Ausnehmung (45) sowie Mittel (53, 83) zum Abdichten des Ringraums (54) von der zweiten Ausnehmung (47) aufweist, wobei der Stößel (55) mittels eines hydraulischen Übersetzers (69) von dem Aktor betätigt wird, wobei die erste Ausnehmung (45) auf der dem hydraulischen Übersetzer (69) zugewandten Seite des Ringraums (54) angeordnet ist, und wobei die zweite Ausnehmung (45) auf der dem hydraulischen Übersetzer (69) abgewandten Seite des Ringraums (54) angeordnet ist, und mit einer Schließfeder (75), die auf das Stellglied (49) entgegen der Betätigungsrichtung des Aktors einwirkt, **dadurch gekennzeichnet, dass** die Schließfeder (75) auf der dem hydraulischen Übersetzer (69) abgewandten Seite des Ringraums (54) angeordnet ist, dass die Schließfeder (75) in einer an einen Steuerraum (11) anschließenden dritten Ausnehmung (85) angeordnet ist und sich über eine in einer zweiten Führungsbohrung (89) geführten Druckstange (91) gegen das Stellglied (49) und einen in einer Ringnut (92) in der dritten Ausnehmung (85) angeordneten Seeger-Ring (87) abstützt, und dass die dritte Ausnehmung (85) auf der dem hydraulischen Übersetzer (69) abgewandten Seite des Ringraums (54) angeordnet ist.

3. Steuerventil für den Injektor eines Kraftstoffeinspritzsystems für Brennkraftmaschinen mit einem von einem Aktor betätigten Stellglied (49), wobei das Stellglied (49) und eine Bohrung (41) eines Gehäuses (29) einen radial begrenzten Ringraum (54) bilden, der an seinen Enden eine erste Ausnehmung (45) und eine zweite Ausnehmung (47) aufweist, wobei das Stellglied (49) mittels eines in einer ersten Führungsbohrung (43) geführten Stößels (55) axial verschiebbar ist und Mittel (51, 81) zum Abdichten des Ringraums (54) von der ersten Ausnehmung (45) sowie Mittel (53, 83) zum Abdichten des Ringraums (54) von der zweiten Ausnehmung (47) aufweist, wobei der Stößel (55) mittels eines hydraulischen Übersetzers (69) von dem Aktor betätigt wird, wobei die erste Ausnehmung (45) auf der dem hydraulischen Übersetzer (69) zugewandten Seite des Ringraums (54) angeordnet ist, und wobei die zweite Ausnehmung (45) auf der dem hydraulischen Übersetzer (69) abgewandten Seite des Ringraums (54) angeordnet ist, und mit einer Schließfeder (75), die auf das Stellglied (49) entgegen der Betätigungsrichtung des Aktors einwirkt, **dadurch gekennzeichnet, dass** die Schließfeder (75) auf der dem hydraulischen Übersetzer (69) abgewandten Seite des Ringraums (54) angeordnet ist, dass die Schließfeder (75) in einer an einen Steuerraum (11) anschließenden dritten Ausnehmung (85) angeordnet ist und sich über eine in einer zweiten Führungsbohrung (89) geführte Druckstange (91) gegen das Stellglied (47) und einen in den Steuerraum (11) ragenden ventilkolben (19) abstützt.

4. Steuerventil nach einem der Ansprüche 1 bis 3, **dadurch gekennzeichnet, dass** die erste Ausnehmung (45) mit einem Kraftstoffrücklauf (17) in Verbindung steht.

5. Steuerventil nach einem der vorhergehenden Ansprüche, **dadurch gekennzeichnet, dass** die zweite Ausnehmung (47) mit einem Steuerraum (11) in Verbindung steht.

6. Steuerventil nach einem der vorhergehenden Ansprüche, **dadurch gekennzeichnet, dass** die dem Stellglied (49) abgewandte Stirnseite des Stößels (55) und ein von dem Aktor betätigter Kolben (71) einen flüssigkeitsgefüllten Druckraum (73) des hydraulischen Übersetzers (69) begrenzen.

7. Steuerventil nach einem der vorhergehenden Ansprüche, **dadurch gekennzeichnet, dass** die Druckstange (91) in Längsrichtung verlaufende Nuten, Längsbohrungen oder sich im Wesentlichen über die Länge der Druckstange (91) erstreckende Abflachungen aufweist.

8. Steuerventil nach einem der vorhergehenden Ansprüche, **dadurch gekennzeichnet, dass** das Stellglied (49) einen koaxial zur Längsachse des Stößels (55) angeordneten Bund (50) aufweist, und dass die Mittel (53) zum Abdichten des Ringraums (54) von der zweiten Ausnehmung (47) und/oder die Mittel (51) zum Abdichten des Ringraums (54) von der ersten Ausnehmung (45) einen koaxial zur Längsachse des Stößels (55) angeordneten kegelstumpfförmigen Dichtkegel (51, 53) aufweisen.

9. Steuerventil nach Anspruch 8, **dadurch gekennzeichnet, dass** der zweite Dichtkegel (53) Teil einer koaxial zur Längsachse des Stellglieds (49) angeordneten Hülse (61) ist.

10. Steuerventil nach Anspruch 9, **dadurch gekennzeichnet, dass** die dem Stellglied (49) zugewandte Stirnfläche (67) der Hülse (61) eben ist, und dass die der Hülse (61) zugewandte Stirnfläche des Stellglieds (49) eben ist.

11. Steuerventil nach Anspruch 9, **dadurch gekennzeichnet, dass** die dem Stellglied (49) zugewandte Stirnfläche (67) der Hülse (61) und die der Hülse (61) zugewandte Stirnfläche des Stellglieds (49) kegelstumpfförmig sind.

12. Steuerventil nach einem der Ansprüche 9 bis 11, **dadurch gekennzeichnet, dass** die Hülse (61) lösbar mit dem Stellglied (49) verbunden ist.

13. Steuerventil nach einem der Ansprüche 1 bis 7, **dadurch gekennzeichnet, dass** das Stellglied (49) kugelförmig ausgebildet ist, und dass die Mittel zum Abdichten des Ringraums (54) von der zweiten Ausnehmung (47) und/oder die Mittel zum Abdichten des Ringraums (54) von der ersten Ausnehmung (45) auf der Kugeloberfläche verlaufende Dichtlinien (81, 83) sind.

14. Steuerventil nach einem der vorhergehenden Ansprüche, **dadurch gekennzeichnet, dass** zwischen der Bohrung (41) sowie der ersten und der zweiten Ausnehmung (45, 47) Dichtflächen (57, 59) ausgebildet sind, die mit den Mitteln (51, 81) zum Abdichten des Ringraums (54) von der ersten Ausnehmung (45) und/oder den Mitteln (53, 83) zum Abdichten des Ringraums (54) von der zweiten Ausnehmung (47) zusammenwirken.

15. Steuerventil nach einem der vorhergehenden Ansprüche, **dadurch gekennzeichnet, dass** das Gehäuse (29) einteilig ausgeführt ist.

16. Steuerventil nach einem der vorhergehenden Ansprüche, **dadurch gekennzeichnet, dass** das Steuerventil (15) ein 2/3-Steuerventil ist.

17. Steuerventil nach einem der vorhergehenden Ansprüche, **dadurch gekennzeichnet, dass** der Aktor ein Piezo-Aktor ist.

18. Steuerventil nach einem der vorhergehenden Ansprüche, **dadurch gekennzeichnet, dass** das Einspritzsystem ein Common-Rail-Einspritzsystem ist.

19. Injektor für ein Kraftstoffeinspritzsystem für Brennkraftmaschinen mit einem von einem Steuerventil (15) gesteuerten Steuerraum (11), **dadurch gekennzeichnet, dass** das Steuerventil (15) ein Steuerventil nach einem der vorhergehenden Ansprüche ist.

## Claims

1. Control valve for the injector of a fuel injection system for internal combustion engines having an actuating element (49) which is operated by an actuator, the actuating element (49) and a bore (41) of a housing (29) forming a radially delimited annular space (54) which at its ends has a first recess (45) and a second recess (47), the actuating element (49) being axially displaceable by means of a pusher (55) which is guided in a first guide bore (43) and having means (51, 81) for sealing off the annular space (54) from the first recess (45) and also having means (53, 83) for sealing off the annular space (54) from the second recess (47), the pusher (55) being operated by the actuator by means of a hydraulic transmitter (69), the first recess (45) being arranged on that side of the annular space (54) which faces towards the hydraulic transmitter (69), and the second recess (47) being arranged on that side of the annular space (54) which faces away from the hydraulic transmitter (69), and having a closing spring (75) which acts on the actuating element (49) counter to the direction of operation of the actuator, **characterized in that** the closing spring (75) is arranged on that side of the annular space (54) which faces away from the hydraulic transmitter (69) and **in that** the closing spring (75) is arranged in the second recess (47) and rests against a shoulder (77) in the housing (29) and against the actuating element (49).

2. Control valve for the injector of a fuel injection system for internal combustion engines having an actuating element (49) which is operated by an actuator, the actuating element (49) and a bore (41) of a housing (29) forming a radially delimited annular space (54) which at its ends has a first recess (45) and a second recess (47), the actuating element (49) being axially displaceable by means of a pusher (55) which is guided in a first guide bore (43) and having means (51, 81) for sealing off the annular space (54) from the first recess (45) and also having means (53, 83) for sealing off the annular space (54) from the second recess (47), the pusher (55) being operated by the actuator by means of a hydraulic transmitter (69), the first recess (45) being arranged on that side of the annular space (54) which faces towards the hydraulic transmitter (69), and the second recess (47) being arranged on that side of the annular space (54) which faces away from the hydraulic transmitter (69), and having a closing spring (75) which acts on the actuating element (49) counter to the direction of operation of the actuator, **characterized in that** the closing spring (75) is arranged on that side of the annular space (54) which faces away from the hydraulic transmitter (69), **in that** the closing spring (75) is arranged in a third recess (85), which adjoins a control space (11), and rests, by means of a push rod (91) which is guided in a second guide bore (89), against the actuating element (49) and against a Seeger circlip ring (87) which is arranged in an annular groove (92) in the third recess (85), and **in that** the third recess (85) is arranged on that side of the annular space (54) which faces away from the hydraulic transmitter (69).

3. Control valve for the injector of a fuel injection system for internal combustion engines having an actuating element (49) which is operated by an actuator, the actuating element (49) and a bore (41) of a housing (29) forming a radially delimited annular space (54) which at its ends has a first recess (45) and a second recess (47), the actuating element (49) being axially displaceable by means of a pusher (55) which is guided in a first guide bore (43) and having means (51, 81) for sealing off the annular space (54) from the first recess (45) and also having means (53, 83) for sealing off the annular space (54) from the second recess (47), the pusher (55) being operated by the actuator by means of a hydraulic transmitter (69), the first recess (45) being arranged on that side of the annular space (54) which faces towards the hydraulic transmitter (69), and the second recess (47) being arranged on that side of the annular space (54) which faces away from the hydraulic transmitter (69), and having a closing spring (75) which acts on the actuating element (49) counter to the direction of operation of the actuator, **characterized in that** the closing spring (75) is arranged on that side of the annular space (54) which faces away from the hydraulic transmitter (69), **in that** the closing spring (75) is arranged in a third recess (85), which adjoins a control space (11), and rests, by means of a push rod (91) which is guided in a second guide bore (89), against the actuating element (49) and against a valve piston (19) which projects into the control space (11).

4. Control valve according to one of Claims 1 to 3, **characterized in that** the first recess (45) is connected to a fuel return (17).

5. Control valve according to one of the preceding claims, **characterized in that** the second recess (47) is connected to a control space (11).

6. Control valve according to one of the preceding claims, **characterized in that that** end side of the pusher (55) which faces away from the actuating element (49) and a piston (71) which is operated by the actuator delimit a liquid-filled pressure space (73) of the hydraulic transmitter (69).

7. Control valve according to one of the preceding claims, **characterized in that** the push rod (91) has grooves running in the longitudinal direction, longitudinal bores or flattenings which extend substantially over the length of the push rod (91).

8. Control valve according to one of the preceding claims, **characterized in that** the actuating element (49) has a collar (50) which is arranged coaxially with respect to the longitudinal axis of the pusher (55), and **in that** the means (53) for sealing off the annular space (54) from the second recess (47) and/or the means (51) for sealing off the annular space (54) from the first recess (45) have a frustoconical sealing cone (51, 53) which is arranged coaxially with respect to the longitudinal axis of the pusher (55).

9. Control valve according to Claim 8, **characterized in that** the second sealing cone (53) is part of a sleeve (61) which is arranged coaxially with respect to the longitudinal axis of the actuating element (49).

10. Control valve according to Claim 9, **characterized in that that** end face (67) of the sleeve (61) which faces towards the actuating element (49) is planar, and **in that** that end face of the actuating element (49) which faces towards the sleeve (61) is planar.

11. Control valve according to Claim 9, **characterized in that that** end face (67) of the sleeve (61) which faces towards the actuating element (49) and that end face of the actuating element (49) which faces towards the sleeve (61) are frustoconical.

12. Control valve according to one of Claims 9 to 11, **characterized in that** the sleeve (61) is detachably connected to the actuating element (49).

13. Control valve according to one of Claims 1 to 7, **characterized in that** the actuating element (49) is of spherical form, and **in that** the means for sealing off the annular space (54) from the second recess (47) and/or the means for sealing off the annular space (54) from the first recess (45) are sealing lines (81, 83) which run on the surface of the sphere.

14. Control valve according to one of the preceding claims, **characterized in that** sealing surfaces (57, 59) are formed between the bore (41) and also the first and second recess (45, 47), which sealing surfaces (57, 59) interact with the means (51, 81) for sealing off the annular space (54) from the first recess (45) and/or the means (53, 83) for sealing off the annular space (54) from the second recess (47).

15. Control valve according to one of the preceding claims, **characterized in that** the housing (29) is embodied in one piece.

16. Control valve according to one of the preceding claims, **characterized in that** the control valve (15) is a 2/3 control valve.

17. Control valve according to one of the preceding claims, **characterized in that** the actuator is a piezoelectric actuator.

18. Control valve according to one of the preceding claims, **characterized in that** the injection system is a common rail injection system.

19. Injector for a fuel injection system for internal combustion engines having a control space (11) which is controlled by a control valve (15), **characterized in that** the control valve (15) is a control valve according to one of the preceding claims.

## Revendications

1. Soupape de commande pour l'injecteur d'un système d'injection de carburant pour des moteurs à combustion interne, comprenant un organe de réglage (49) actionné par un actionneur, dans laquelle
l'organe de réglage (49) et un alésage (41) d'un boîtier (29) forment une chambre annulaire (54) radialement délimitée, qui à ses extrémités présente un premier évidement (45) et un deuxième évidement (47),
l'organe de réglage (49) est déplaçable axialement au moyen d'un poussoir (55) guidé dans un premier alésage de guidage (43) et présente des moyens (51, 81) pour étancher la chambre annulaire (54) par rapport au premier évidement (45) ainsi que des moyens (53, 83) pour étancher la chambre annulaire (54) par rapport au deuxième évidement (47),
le poussoir (55) est actionné par l'actionneur au moyen d'un amplificateur hydraulique (69),
le premier évidement (45) est disposé sur la face de la chambre annulaire (54) tournée vers l'amplificateur hydraulique (69), et
le deuxième évidement (45) est disposé sur la face de la chambre annulaire (54) opposée à l'amplificateur hydraulique (69),
et comprenant un ressort de fermeture (75) qui agit sur l'organe de réglage (49) à l'opposé de la direction d'actionnement de l'actionneur,
**caractérisée en ce que**
le ressort de fermeture (75) est disposé sur la face de la chambre annulaire (54) opposée à l'amplificateur hydraulique (69), et
le ressort de fermeture (75) est disposé dans le deuxième évidement (47) et prend appui sur un gradin (77) dans le boîtier (29) et sur l'organe de réglage (49).

2. Soupape de commande pour l'injecteur d'un système d'injection de carburant pour des moteurs à combustion interne, comprenant un organe de réglage (49) actionné par un actionneur, dans laquelle
l'organe de réglage (49) et un alésage (41) d'un boîtier (29) forment une chambre annulaire (54) radialement délimitée, qui à ses extrémités présente un premier évidement (45) et un deuxième évidement (47),
l'organe de réglage (49) est déplaçable axialement au moyen d'un poussoir (55) guidé dans un premier alésage de guidage (43) et présente des moyens (51, 81) pour étancher la chambre annulaire (54) par rapport au premier évidement (45) ainsi que des moyens (53, 83) pour étancher la chambre annulaire (54) par rapport au deuxième évidement (47),
le poussoir (55) est actionné par l'actionneur au moyen d'un amplificateur hydraulique (69),
le premier évidement (45) est disposé sur la face de la chambre annulaire (54) tournée vers l'amplificateur hydraulique (69), et
le deuxième évidement (45) est disposé sur la face de la chambre annulaire (54) opposée à l'amplificateur hydraulique (69),
et comprenant un ressort de fermeture (75) qui agit sur l'organe de réglage (49) à l'opposé de la direction d'actionnement de l'actionneur,
**caractérisée en ce que**
le ressort de fermeture (75) est disposé sur la face de la chambre annulaire (54) opposée à l'amplificateur hydraulique (69),
le ressort de fermeture (75) est disposé dans un troisième évidement (85) voisin d'une chambre de commande (11) et prend appui contre l'organe de réglage (49) par l'intermédiaire d'une tige de pression (91) guidée dans un deuxième alésage de guidage (89) et contre un circlip (87) disposé dans une rainure annulaire (92) dans le troisième évidement (85), et
le troisième évidement (85) est disposé sur la face de la chambre annulaire (54) opposée à l'amplificateur hydraulique (69).

3. Soupape de commande pour l'injecteur d'un système d'injection de carburant pour des moteurs à combustion interne, comprenant un organe de réglage (49) actionné par un actionneur, dans laquelle
l'organe de réglage (49) et un alésage (41) d'un boîtier (29) forment une chambre annulaire (54) radialement délimitée, qui à ses extrémités présente un premier évidement (45) et un deuxième évidement (47),
l'organe de réglage (49) est déplaçable axialement au moyen d'un poussoir (55) guidé dans un premier alésage de guidage (43) et présente des moyens (51, 81) pour étancher la chambre annulaire (54) par rapport au premier évidement (45) ainsi que des moyens (53, 83) pour étancher la chambre annulaire (54) par rapport au deuxième évidement (47),
le poussoir (55) est actionné par l'actionneur au moyen d'un amplificateur hydraulique (69),
le premier évidement (45) est disposé sur la face de la chambre annulaire (54) tournée vers l'amplificateur hydraulique (69), et
le deuxième évidement (45) est disposé sur la face de la chambre annulaire (54) opposée à l'amplificateur hydraulique (69),
et comprenant un ressort de fermeture (75) qui agit sur l'organe de réglage (49) à l'opposé de la direction d'actionnement de l'actionneur,
**caractérisée en ce que**
le ressort de fermeture (75) est disposé sur la face de la chambre annulaire (54) opposée à l'amplificateur hydraulique (69),
le ressort de fermeture (75) est disposé dans un troisième évidement (85) voisin d'une chambre de commande (11) et prend appui contre l'organe de réglage (49) par l'intermédiaire d'une tige de pression (91) guidée dans un deuxième alésage de guidage (89) et contre un piston de soupape (19) saillant dans la chambre de commande (11).

4. Soupape de commande selon l'une quelconque des revendications 1 à 3,
**caractérisée en ce que**
le premier évidement (45) est en communication avec un retour de carburant (17).

5. Soupape de commande selon l'une quelconque des revendications précédentes,
**caractérisée en ce que**
le deuxième évidement (47) est en communication avec une chambre de commande (11).

6. Soupape de commande selon l'une quelconque des revendications précédentes,
**caractérisée en ce que**
la face frontale du poussoir (55) opposée à l'organe de réglage (49) et un piston (71) actionné par l'actionneur délimitent une chambre de pression (73) remplie de liquide de l'amplificateur hydraulique (69).

7. Soupape de commande selon l'une quelconque des revendications précédentes,
**caractérisée en ce que**
la tige de pression (91) présente des rainures s'étendant dans la direction longitudinale, des alésages longitudinaux ou des méplats s'étendant pour l'essentiel sur la longueur de la tige de pression (91).

8. Soupape de commande selon l'une quelconque des revendications précédentes,
**caractérisée en ce que**
l'organe de réglage (49) présente un collet (50) disposé coaxialement à l'axe longitudinal du poussoir (55), et les moyens (53) pour étancher la chambre annulaire (54) par rapport au deuxième évidement (47) et/ou les moyens pour étancher la chambre annulaire (54) par rapport au premier évidement (45) présentent un cône d'étanchéité (51, 53) tronconique disposé coaxialement à l'axe longitudinal du poussoir (55).

9. Soupape de commande selon la revendication 8,
**caractérisée en ce que**
le deuxième cône d'étanchéité (53) fait partie d'une douille (61) disposée coaxialement à l'axe longitudinal de l'organe de réglage (49).

10. Soupape de commande selon la revendication 9,
**caractérisée en ce que**
la face frontale (67) de la douille (61) tournée vers l'organe de réglage (49) est plane, et la face frontale de l'organe de réglage (49) tournée vers la douille (61) est plane.

11. Soupape de commande selon la revendication 9,
**caractérisée en ce que**
la face frontale (67) de la douille (61) tournée vers l'organe de réglage (49) et la face frontale de l'organe de réglage (49) tournée vers la douille (61) sont tronconiques.

12. Soupape de commande selon l'une quelconque des revendications 9 à 11,
**caractérisée en ce que**
la douille (61) est reliée de manière amovible à l'organe de réglage (49).

13. Soupape de commande selon l'une quelconque des revendications 1 à 7,
**caractérisée en ce que**
l'organe de réglage (49) présente une forme sphérique, et les moyens pour étancher la chambre annulaire (54) par rapport au deuxième évidement (47) et/ou les moyens pour étancher la chambre annulaire (54) par rapport au premier évidement (45) sont des lignes d'étanchéité (81, 83) s'étendant à la surface de la sphère.

14. Soupape de commande selon l'une quelconque des revendications précédentes,
**caractérisée en ce qu'**
entre l'alésage (41) et le premier et le deuxième évidement (45, 47) des surfaces d'étanchéité (57, 59) sont formées et coopèrent avec les moyens (51, 81) pour étancher la chambre annulaire (54) par rapport au premier évidement (45) et/ou les moyens (53, 83) pour étancher la chambre annulaire (54) par rapport au deuxième évidement (47).

15. Soupape de commande selon l'une quelconque des revendications précédentes,
**caractérisée en ce que**
le boîtier (29) est réalisé d'une seule pièce.

16. Soupape de commande selon l'une quelconque des revendications précédentes,
**caractérisée en ce que**
la soupape de commande (15) est une soupape de commande à 2/3 voies.

17. Soupape de commande selon l'une quelconque des revendications précédentes,
**caractérisée en ce que**
l'actionneur est un actionneur piézoélectrique.

18. Soupape de commande selon l'une quelconque des revendications précédentes,
**caractérisée en ce que**
le système d'injection est un système d'injection à rampe commune.

19. Injecteur pour un système d'injection de carburant pour moteurs à combustion interne, comprenant une chambre de commande (11) commandée par une soupape de commande (15),
**caractérisé en ce que**
la soupape de commande (15) est une soupape de commande selon l'une quelconque des revendications précédentes.
